# EUROPEAN PATENT APPLICATION

(11) **EP 4 848 357 A1**
(43) Date of publication of application: **02.12.2026**
(21) Application number: 25901901.6
(22) Date of filing: 03.12.2025
(51) Int. Cl.: H01M 4/1397, H01M 4/04, H01M 4/136, H01M 4/58, H01M 4/36, H01M 4/525, H01M 4/62, H01M 10/052, H01M 4/02

(54) **CATHODE MANUFACTURING METHOD, CATHODE, AND LITHIUM SECONDARY BATTERY**

(30) Priority: 05.12.2024 KR 20240179519
(71) Applicant: LG Energy Solution, Ltd., Seoul 07335 (KR)
(72) Inventor: KIM, Mid Eum, Daejeon 34122 (KR); GU, Dae Geun, Daejeon 34122 (KR); KIM, Yeon Kyoung, Daejeon 34122 (KR); YOO, Ji Hyeok, Daejeon 34122 (KR); AHN, Se Young, Daejeon 34122 (KR); CHOI, Myeong Hun, Daejeon 34122 (KR); KIM, Ju Hee, Daejeon 34122 (KR); KIM, Do Hyoung, Daejeon 34122 (KR); KIM, Sang Wu, Daejeon 34122 (KR)
(74) Representative: Hoffmann Eitle
(86) International application number: PCT/KR2025/020490
(87) International publication number: WO 2026/121824

(57) **Abstract**

A positive electrode according to exemplary embodiments of the present disclosure includes a positive electrode current collector and a positive electrode active material layer. The positive electrode active material layer includes a first positive electrode material represented by Chemical Formula 1 and a second positive electrode material represented by Chemical Formula 2. When the positive electrode is cut along the thickness direction (Z direction) to produce five sample positive electrodes with an X-direction length of 200 µm and a Y-direction length of 200 µm, the first positive electrode material is present in the SEM images of the cross-sections of all five sample positive electrodes.

## Description

### [Technical field]

This application claims the benefit of priority from Korean Patent Application No. 10-2024-0179519, filed on December 5, 2024, the disclosure of which is incorporated herein by reference.

The present disclosure relates to a method for manufacturing a positive electrode, a positive electrode, and a lithium secondary battery.

### [Background]

As lithium-ion batteries undergo an activation process, a Solid Electrolyte Interface (SEI) layer forms on the negative electrode. This formation consumes lithium ions, resulting in irreversible capacity loss.

To compensate for this irreversible lithium-ion loss, a sacrificial positive electrode material rich in lithium has been introduced into the positive electrode. This sacrificial positive electrode material functions as a source of lithium ions, compensating for the initial irreversible capacity loss of lithium-ion batteries.

Patent Document 1 below discloses a positive electrode including a first coating layer coated on an aluminum foil and a second coating layer coated on the first coating layer, wherein the first coating layer contains lithium iron manganese phosphate (LMFP) as the positive electrode active material, and the second coating layer incorporates a lithium replenishment additive as the positive electrode active material. In the positive electrode according to Patent Document 1, since the lithium replenishment additive is distributed mainly on the surface of the positive electrode, there is a problem that the capacity utilization rate of the lithium replenishment additive decreases.

(Patent Document 1) Chinese Published Patent No. 117855391

### [Summary]

### [Technical Problem]

The technical problem to be solved by the technical concept of the present disclosure is to maximize the capacity utilization of the sacrificial positive electrode material in a positive electrode containing the material.

A further technical problem to be solved by the technical concept of the present disclosure is to provide a method for manufacturing a positive electrode in which the capacity utilization rate of the sacrificial positive electrode material is maximized.

### [Technical Solution]

A method for manufacturing a positive electrode according to one embodiment includes: adding a first positive electrode material represented by Chemical Formula 1 below to a solvent and mixing to prepare a first positive electrode material pre-dispersion; adding a second positive electrode material represented by Chemical Formula 2 below, a conductive material, a binder, and a solvent to the first positive electrode material pre-dispersion and mixing to prepare a positive electrode slurry; and applying the positive electrode slurry onto a positive electrode current collector.

[Chemical Formula 1] Li_{5+c}FeO_{4-d}A_{d}

In Chemical Formula 1, 0≤c≤0.2, 0≤d≤0.5, and A comprises one or two or more elements selected from the group consisting of F, Cl, Br, I, At, and S.

[Chemical Formula 2] Li₁₊ₐFe₁₋ₓMₓ(PO_{4-b})X_{b}

In Chemical Formula 2, M comprises any one or two or more elements selected from the group consisting of Al, Mg, Ni, Co, Mn, Ti, Ga, Cu, V, Nb, Zr, Ce, In, Zn, and Y,
X comprises any one or two or more elements selected from the group consisting of F, S, and N, and
a, b, and x satisfy -0.5≤a≤0.5, 0≤b≤0.1, and 0≤x≤0.8, respectively.

A method for manufacturing a positive electrode according to another embodiment includes: mixing a conductive material and the first positive electrode material represented by Chemical Formula 1 below to prepare a first positive electrode material mixture; adding the first positive electrode material mixture and a binder solution in which a binder is dispersed to a solvent and mixing to prepare a first positive electrode material pre-dispersion; adding the second positive electrode material represented by Chemical Formula 2 below and a solvent to the first positive electrode material pre-dispersion and mixing to prepare a positive electrode slurry; and applying the positive electrode slurry onto a positive electrode current collector.

A positive electrode according to exemplary embodiments includes: a positive electrode current collector; and a positive electrode active material layer disposed on the positive electrode current collector. The positive electrode active material layer includes a first positive electrode material represented by Chemical Formula 1 and a second positive electrode material represented by Chemical Formula 2, and when the positive electrode is cut along the thickness direction (Z direction) so that the length in the X direction is 200 µm and the length in the Y direction is 200 µm, the first positive electrode material is present in an SEM image of the cross-section.

In exemplary embodiments, the first positive electrode material is included in an amount ranging from 0.5 to 5 wt% relative to the total weight of the first and second positive electrode materials.

In exemplary embodiments, the first positive electrode material includes Li₅FeO₄.

In exemplary embodiments, the conductive material includes carbon black.

In exemplary embodiments, the first positive electrode material has an average particle diameter (D₅₀) in the range of 1 to 20 µm.

In exemplary embodiments, the second positive electrode material has an average particle diameter (D₅₀) in the range of 0.2 to 3.0 µm.

In exemplary embodiments, the positive electrode satisfies Condition 1 below.

### [Condition 1]

When the cross-section of the positive electrode active material layer is equally divided into three regions along the thickness direction, the ratio of the area of the first positive electrode material in each region to the total area of the first positive electrode material in the cross-section falls within the range of 0.2 to 0.45.

In exemplary embodiments, in the positive electrode active material layer, the first positive electrode material is included in an amount ranging from 0.5 to 5 wt% relative to the total weight of the first and second positive electrode materials.

In exemplary embodiments, at the time of initial charging, the capacity value delivered by the first positive electrode material calculated according to Equation 1 below is 700 mAh/g or more. [Equation 1] 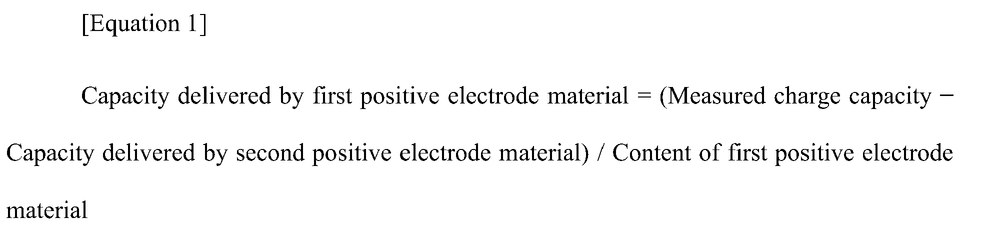 Capacity delivered by first positive electrode material = (Measured charge capacity - Capacity delivered by second positive electrode material) / Content of first positive electrode material

In exemplary embodiments, the positive electrode active material layer has a Quantified Binder Ratio (QBR) of 1.3 or less, and the QBR is defined by Equation 2 below. [Equation 2] $QBR = Bs / Bf$

In Equation 2, Bs represents the average fluorine content in the positive electrode active material layer surface region extending from the outermost surface of the positive electrode active material layer to within 15% of the total thickness of the positive electrode active material layer; and Bf represents the average fluorine content in the positive electrode active material layer bottom region extending from the interface of the positive electrode active material layer facing the current collector to within 15% of the total thickness of the positive electrode active material layer.

A lithium secondary battery according to exemplary embodiments includes a positive electrode, a negative electrode, a separator, and an electrolyte, wherein the positive electrode is the positive electrode described above.

### [Advantageous Effects]

According to the present disclosure, the dispersibility of the first positive electrode material is maximized in the step of preparing the positive electrode slurry, thereby alleviating the phenomenon in which the capacity utilization of the first positive electrode material is reduced due to the first positive electrode material being unevenly distributed or absent at certain locations within the manufactured positive electrode.

According to the present disclosure, the adhesion strength of the positive electrode can be improved without increasing the binder content.

According to the present disclosure, since the first positive electrode material is uniformly distributed within the positive electrode, the capacity utilization of the first positive electrode material can be maximized, thereby instantiating a lithium secondary battery with excellent initial capacity and long-term cycle life characteristics.

### [Brief Description of the Drawings]

FIG. 1 is a flowchart illustrating a method for manufacturing a positive electrode according to a first embodiment.
FIG. 2 is a flowchart illustrating a method for manufacturing a positive electrode according to a second embodiment.
FIG. 3 is a cross-sectional view of a positive electrode according to exemplary embodiments of the present disclosure.
FIG. 4 is an SEM image of a cross-section of a positive electrode according to the Example.
FIG. 5 is an SEM image of a cross-section of a positive electrode according to the Comparative Example.

### [Description of Reference Numerals]

100: Positive electrode
110: Positive electrode current collector
120: Positive electrode active material layer

### [Best Mode for Carrying out the Invention]

The following provides a more detailed description of the present disclosure to aid in understanding the present disclosure.

The terms and words used in this specification and the claims should not be interpreted as limited to their conventional or dictionary meanings, but should be interpreted in accordance with the technical concepts of the disclosure, based on the principle that the inventor may appropriately define the concepts of the terms to describe the disclosure in the best possible manner.

The terms used in this specification are merely used to describe exemplary embodiments and are not intended to limit the scope of the disclosure. Unless the context clearly indicates otherwise, singular expressions include plural expressions.

In this specification, terms such as "include," "comprise," or "have" are intended to designate the existence of implemented features, numbers, steps, components, or combinations thereof, and should be understood not to preclude the existence or possibility of adding one or more other features, numbers, steps, components, or combinations thereof.

In this specification, the description "A and/or B" means "A or B or both."

In this specification, "%" means wt% unless explicitly indicated otherwise.

In this specification, the average particle diameter (D₅₀) refers to the particle diameter corresponding to 50% of the volume cumulative amount in the particle size distribution curve. The D₅₀ can be measured, for example, using a laser diffraction method. The laser diffraction method can generally measure particle sizes from the submicron range to several millimeters and can obtain results with high reproducibility and high resolution.

In the present specification, the description "mixing" includes not only simple mixing but also stirring using means such as a disperser or a mixer.

### Method for Manufacturing Positive electrode

The method for manufacturing a positive electrode according to exemplary embodiments of the present disclosure is a method for manufacturing a positive electrode including a first positive electrode material represented by Chemical Formula 1 below and a second positive electrode material represented by Chemical Formula 2 below.

[Chemical Formula 1] Li_{5+c}FeO_{4-d}A_{d}

In Chemical Formula 1, 0≤c≤0.2, 0≤d≤0.5, and A comprises one or two or more elements selected from the group consisting of F, Cl, Br, I, At, and S.

[Chemical Formula 2] Li₁₊ₐFe₁₋ₓMₓ(PO_{4-b})X_{b}

In Chemical Formula 2, M comprises any one or two or more elements selected from the group consisting of Al, Mg, Ni, Co, Mn, Ti, Ga, Cu, V, Nb, Zr, Ce, In, Zn, and Y,
X comprises any one or two or more elements selected from the group consisting of F, S, and N, and
a, b, and x satisfy -0.5≤a≤0.5, 0≤b≤0.1, and 0≤x≤0.8, respectively.

In the positive electrode according to the present disclosure, the main component of the positive electrode active material is the second positive electrode material. The first positive electrode material is rich in lithium and functions to compensate for irreversible capacity loss of lithium at the beginning of charge/discharge cycling, while also contributing to the overall capacity of the positive electrode. The first positive electrode material has a theoretical capacity of 700 mAh/g or more, which is extremely high. However, when the first positive electrode material is applied together with the second positive electrode material, not all of the first positive electrode material can react reversibly due to differences in reaction potential and electronic conductivity within the electrode, and therefore the first positive electrode material cannot achieve 100% capacity utilization. If the capacity utilization rate of the first positive electrode material can be increased, a secondary battery with high energy density can be instantiated.

The inventors of the present disclosure discovered that in order to maximize the capacity utilization of the first positive electrode material contained in the positive electrode, the first positive electrode material should be uniformly distributed within the positive electrode active material layer, and that for the first positive electrode material to be uniformly distributed within the positive electrode active material layer, it must be well-dispersed in the positive electrode slurry, thereby arriving at the present disclosure.

The method for manufacturing a positive electrode according to exemplary embodiments of the present disclosure includes a step of first preparing a first positive electrode material pre-dispersion in order to ensure good dispersion of the first positive electrode material in the positive electrode slurry. The positive electrode slurry prepared according to exemplary embodiments of the present disclosure exhibits superior dispersibility of the first positive electrode material compared to a positive electrode slurry prepared by simultaneously adding the first and second positive electrode materials to a solvent and mixing, or by mixing the first and second positive electrode materials in powder form followed by adding and mixing the mixture in a solvent. Accordingly, the positive electrode manufactured using the positive electrode slurry prepared according to the present disclosure has the effect of increasing the capacity utilization of the first positive electrode material due to its uniform distribution within the positive electrode active material layer.

The first positive electrode material in Chemical Formula 1 is preferably 0≤c≤0.1 and 0≤d≤0.2. The first positive electrode material may be Li₅FeO₄. Li₅FeO₄ can more effectively compensate for the irreversible capacity of the negative electrode during initial charging. The first positive electrode material may be included in an amount of 0.5 to 5 wt%, specifically 0.8 to 4.0 wt%, and more specifically 1.0 to 3.5 wt%, relative to the total weight of the first and second positive electrode materials. When the first positive electrode material is included in the above content range, excellent capacity compensation effects from the first positive electrode material are achieved, and a battery with good energy retention rate can be instantiated.

The first positive electrode material may have a predetermined particle size. For example, the first positive electrode material may have an average particle diameter (D₅₀) in the range of 1 to 20 µm, specifically 2 to 15 µm, and more specifically 3 to 10 µm. When the D₅₀ of the first positive electrode material falls within the above range, the particles have an appropriate size and can be well-dispersed in the positive electrode slurry.

The second positive electrode material may be an active material having an olivine-type crystal structure. The second positive electrode material with an olivine-type crystal structure has a hexahedral crystal form in which phosphorus (P) and oxygen (O) are strongly bonded, exhibiting high structural stability. Due to this, compounds with an olivine-type crystal structure can easily maintain their crystal structure even when all lithium ions are deintercalated during charging, and structural decomposition does not readily occur even under high-temperature conditions.

Traditional lithium iron phosphate (LFP) has a low energy density, i.e., a low amount of energy that can be stored per unit weight/volume. To address this drawback, the present disclosure has selected the compound represented by Chemical Formula 2 from among the olivine-type crystal structure compounds. The compound represented by Chemical Formula 2 is one in which part of the iron in conventional LFP is substituted with a metal such as manganese, resulting in a higher operating voltage compared to conventional LFP and enabling the instantiation of high energy density. Since the positive electrode according to the present disclosure mainly includes the second positive electrode material as the positive electrode active material, it exhibits excellent safety at high temperatures and enables higher energy density compared to conventional LFP.

In a preferred embodiment, M in Chemical Formula 2 may be manganese. In such lithium manganese iron phosphate (LMFP), the molar ratio of manganese to iron may be 50:50 to 70:30, preferably 55:45 to 65:35, in order to instantiate high energy density.

The second positive electrode material may have a predetermined particle size. For example, the D₅₀ of the second positive electrode material may be 0.2 µm to 3.0 µm, specifically within the ranges: 0.3 to 2.0 µm; 0.3 to 2.5 µm; 0.5 to 3.0 µm; 0.5 to 2.5 µm; 0.5 to 2.0 µm; 0.5 to 1.5 µm; 0.5 to 1.2 µm; 0.6 to 1.2 µm; 0.5 to 1.0 µm; 0.2 to 0.7 µm; 0.2 to 0.6 µm; 0.4 to 1.0 µm; or 0.4 to 0.9 µm.

By controlling the D₅₀ of the second positive electrode material within the aforementioned ranges, the present disclosure can prevent the deterioration of processability during positive electrode manufacturing and the reduction of positive electrode reliability due to agglomeration of positive electrode active material particles resulting from particle sizes below the lower limit of the range. It can also prevent the problem of reduced electrical conductivity of the positive electrode due to particle sizes above the upper limit of the range.

The second positive electrode material may have a structure in which a carbon coating layer is formed on its surface. The carbon coating layer may have a porous structure with a high surface area, as well as high crystallinity, uniformly surrounding the core surface. Such a carbon coating layer structure can further enhance the electrochemical reactivity and electrical properties of the positive electrode active material, thereby improving the power output and cycle life characteristics of the positive electrode.

Here, the thickness of the carbon coating layer can be controlled within a range that does not reduce the energy density of the positive electrode active material. Specifically, the carbon coating layer may have an average thickness of 50 nm or less, more specifically 40 nm or less; 30 nm or less; 20 nm or less; 10 nm or less; 5 to 40 nm; 5 to 20 nm; 10 to 30 nm; 20 to 45 nm; 10 to 20 nm; 5 to 10 nm; 1 to 10 nm; or 3 to 9 nm.

The first and second positive electrode materials may each be single-crystal particles. During the rolling process for electrode fabrication and the charge/discharge cycling of the manufactured positive electrode, particle cracking may occur, and repeated charge/discharge cycles can lead to particle fracture due to such cracking. This particle fracture increases gas generation within the battery and reduces charge/discharge cycle life, leading to deterioration in cycle life performance. When the first and second positive electrode active materials are single-crystal particles, the particles are less prone to fracture during the rolling process and charge/discharge cycling, which is advantageous in terms of battery cycle life performance.

Here, single-crystal particles refer to particles composed of primary particles rather than secondary particles, i.e., single-particle primary structures.
The conductive material is not particularly limited as long as it is conductive without causing chemical changes in the battery. Examples include: graphites such as natural graphite or artificial graphite; carbon blacks such as acetylene black, Ketjen black, channel black, furnace black, lamp black, and thermal black; conductive fibers such as carbon fiber and metal fiber; conductive tubes such as carbon nanotubes (CNTs); fluorocarbon; metal powders such as aluminum, and nickel powder; conductive whiskers such as zinc oxide and potassium titanate; conductive metal oxides such as titanium oxide; and conductive materials such as polyphenylene derivatives. Among these, carbon black is most preferred as the conductive material in the present disclosure. Carbon black has excellent conductivity and can improve the dispersibility of the first and second positive electrode material particles.

The conductive material may be used in an amount of 0.1 to 10 parts by weight, specifically 0.1 to 8 parts by weight, 0.1 to 5 parts by weight, 0.1 to 3 parts by weight, 2 to 6 parts by weight, or 0.5 to 2 parts by weight, relative to 100 parts by weight of the solid content of the positive electrode slurry. By controlling the content of the conductive material within the above range, the present disclosure can prevent an increase in electrode resistance and a decrease in charge capacity due to a low content of the conductive material, and can prevent problems such as a decrease in charge capacity due to a low active material content or a deterioration in fast-charging characteristics due to an increase in the loading amount of the active material layer caused by excess conductive material.

### <First Embodiment>

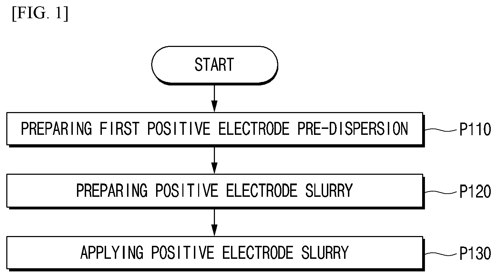

FIG. 1 is a flowchart illustrating a method for manufacturing a positive electrode according to the first embodiment.

Referring to FIG. 1, the method for manufacturing a positive electrode according to exemplary embodiments of the present disclosure may include: preparing a first positive electrode material pre-dispersion (P110); preparing a positive electrode slurry (P120); and applying the positive electrode slurry (P130).

The step of preparing the first positive electrode material pre-dispersion (P110) may include a process of adding the first positive electrode material represented by Chemical Formula 1 to a solvent and mixing. The first positive electrode material has a large surface energy and strong van der Waals attractive forces. The present disclosure is characterized by performing the step of preparing the first positive electrode material pre-dispersion (P110), in which the first positive electrode material is pre-dispersed using solvent alone, in order to enhance the dispersibility of the first positive electrode material. The step of preparing the first positive electrode material pre-dispersion (P110) is performed in the absence of any binder, conductive material, or second positive electrode material. Accordingly, in the step of preparing the first positive electrode material pre-dispersion (P110), the agglomeration of the first positive electrode material can be broken up intensively and exclusively by shear force. Pre-dispersing the first positive electrode material with solvent alone is the most effective way to break up the inherent agglomeration of the first positive electrode material.

Unlike the embodiment of the present disclosure, when the first positive electrode material is not dispersed with solvent alone (e.g., when the first positive electrode material and the conductive material are dispersed in a solvent, or when the first positive electrode material and the binder are dispersed in a solvent), some of the first positive electrode material agglomerates may be fixed by the binder, or some of the first positive electrode material may form composite lumps with the conductive material, resulting in inferior dispersion of the first positive electrode material compared to the present disclosure.

The solvent may be any solvent used in the preparation of positive electrode slurries without limitation. Specific examples of the solvent include dimethyl sulfoxide (DMSO), alcohols, N-methyl-2-pyrrolidone (NMP), water, and acetone.

The mixing means and mixing conditions in the step of preparing the first positive electrode material pre-dispersion (P110) are not particularly limited. Specific examples of the mixing means include a homomixer, a planetary mixer, and a spike mill. The mixing temperature may be specifically in the range of 15 to 60°C, more specifically 20 to 50°C, and even more specifically 23 to 45°C, but is not limited thereto. The mixing speed may be specifically in the range of 500 to 5,000 rpm/min, more specifically 700 to 4,000 rpm/min, and even more specifically 800 to 3,500 rpm/min, but is not limited thereto. The mixing time may be in the range of 30 to 600 minutes; 30 to 300 minutes; 60 to 500 minutes; or 30 to 200 minutes, but is not limited thereto.

The first positive electrode material pre-dispersion may have a viscosity measured at 25°C in the range of 2,000 to 15,000 cps, specifically 3,000 to 12,000 cps, and more specifically 7,400 to 10,000 cps. When the viscosity of the first positive electrode material pre-dispersion is within the above range, the first positive electrode material can be sufficiently dispersed.

The step of preparing the positive electrode slurry (P120) may include a process of adding the second positive electrode material represented by Chemical Formula 2, a conductive material, a binder, and a solvent to the first positive electrode material pre-dispersion and mixing. Here, "mixing" means not only simple mixing but also stirring using the mixing means described in the step of preparing the first positive electrode material pre-dispersion.

Because the first positive electrode material is well-deagglomerated by the step of preparing the first positive electrode material pre-dispersion (P110), the second positive electrode material mixes smoothly with the first positive electrode material in the step of preparing the positive electrode slurry (P120) without generating new large agglomerates.

The step of preparing the positive electrode slurry (P120) may be a single step or may include two or more steps.

When the step of preparing the positive electrode slurry (P120) is performed as a single step, it may be carried out by simultaneously adding the second positive electrode material, conductive material, binder, and solvent to the first positive electrode material pre-dispersion and mixing. In the step of preparing the positive electrode slurry (P120), the mixing means and mixing conditions are not particularly limited. The second positive electrode material added to the first positive electrode material pre-dispersion may be in powder form.

When the step of preparing the positive electrode slurry (P120) includes two or more steps, it may include: adding the second positive electrode material in powder form to the first positive electrode material pre-dispersion and mixing to prepare a pre-dispersion of the first and second positive electrode materials (P121); and adding a conductive material, binder, and solvent to the pre-dispersion of the first and second positive electrode materials and mixing (P122). In step P122, additional second positive electrode material may also be added. In this case, the second positive electrode material is added in two separate stages. According to the present disclosure, a primary mixing/stirring process is performed in the step of preparing the first positive electrode material pre-dispersion (P110), and one or two mixing/stirring processes are performed in the step of preparing the positive electrode slurry (P120). Because the positive electrode slurry is prepared through multiple mixing/stirring operations, the first positive electrode material is uniformly dispersed throughout the positive electrode slurry.

The conductive material described above is as explained earlier.

The binder described above is a component that aids in the coupling of the positive electrode active material and conductive materials, as well as the coupling to the current collector, and can be appropriately applied within a range that does not degrade the electrical properties of the positive electrode. Specifically, the binder may include one or more among vinylidene fluoride-hexafluoropropylene copolymer (PVDF-co-HFP), polyvinylidene fluoride (PVdF), polyacrylonitrile, polymethyl methacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene-butadiene rubber (SBR), and fluororubber.

The binder may be 0.1 to 10 parts by weight per 100 parts by weight of the solid content of the positive electrode slurry, and more specifically, 0.1 to 8 parts by weight, 0.1 to 5 parts by weight, 0.1 to 3 parts by weight, or 2 to 6 parts by weight. The present disclosure can prevent a decrease in the adhesion of the active material layer due to a low binder content or a deterioration in the electrical properties of the positive electrode due to an excess of binder by controlling the binder content in the positive electrode active material layer within the above range.

The positive electrode slurry manufactured as described above may contain solids in the range of 30 to 80 wt%, more specifically 40 to 75 wt%, and even more specifically 50 to 70 wt%. When the solid content is within the above range, the positive electrode slurry has an appropriate viscosity, ensuring excellent coating performance while preventing the drying time from being prolonged due to excessive solvent content.

The step of applying the positive electrode slurry (P130) may involve applying the positive electrode slurry onto the positive electrode current collector.

The positive electrode current collector may be one that possesses high conductivity without inducing chemical changes in the battery. For example, stainless steel, aluminum, nickel, titanium, or sintered carbon may be used; in the case of aluminum or stainless steel, those surface-treated with carbon, nickel, titanium, or silver may also be used. Furthermore, the average thickness of the current collector may be appropriately set within the range of 3 to 500 µm, taking into account the conductivity and total thickness of the positive electrode being manufactured.

The method of applying the positive electrode slurry is not specifically limited and can be performed in various ways. For example, a slit die coater equipped with a slit configured to discharge the positive electrode slurry may be used.

The positive electrode slurry may be coated on only one side of the current collector, or it may be coated on both sides of the current collector.

After the positive electrode slurry coating step is completed, a drying step to remove the solvent from the positive electrode slurry; and a rolling step to press the positive electrode at a predetermined pressure so that the positive electrode active material layer has an appropriate density may be performed.

### <Second Embodiment>

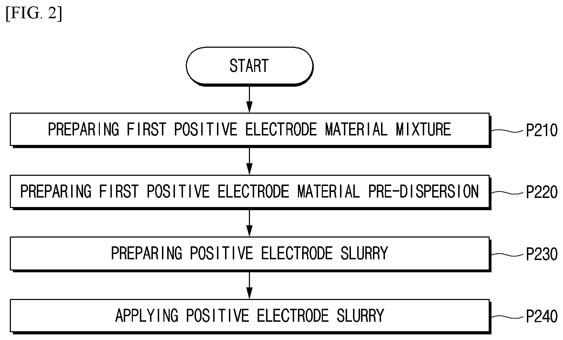

FIG. 2 is a flowchart illustrating a method for manufacturing a positive electrode according to the second embodiment.

Referring to FIG. 2, the method for manufacturing a positive electrode according to the second embodiment may include: preparing a first positive electrode material mixture (P210); preparing a first positive electrode material pre-dispersion (P220); preparing a positive electrode slurry (P230); and applying the positive electrode slurry (P240).
The step of preparing the first positive electrode material mixture (P210) may be a step of mixing the conductive material and the first positive electrode material represented by Chemical Formula 1 to prepare a first positive electrode material mixture. In the step of preparing the first positive electrode material mixture (P210), the first positive electrode material is first mixed with the conductive material, and the agglomeration of the first positive electrode material can be broken up by the conductive material. The surface of the first positive electrode material has a tendency to agglomerate easily due to van der Waals forces. Fine conductive material particles can effectively deagglomerate first positive electrode material lumps by generating mechanical friction or mechanical shear during the mixing process. Since the step of preparing the first positive electrode material mixture (P210) is performed before the introduction of the second positive electrode material described later, there is the additional advantage of no risk of re-agglomeration due to collision between the first and second positive electrode materials during mixing. The conductive material may be either a conductive material pre-dispersion in which the conductive material is dispersed in a dispersion solution, or a powdered conductive material. The first positive electrode material may be in powder form.

The step of preparing the first positive electrode material pre-dispersion (P220) may be a process of adding the first positive electrode material mixture and a binder solution in which a binder is dispersed to a solvent and mixing. The binder solution may be a solution in which the binder is dispersed. When powdered binder is added, the conductive material and first positive electrode material may agglomerate due to the binder; therefore, it is preferable to add a binder pre-dispersion to prepare the first positive electrode material pre-dispersion. The binder component in the binder pre-dispersion improves the wettability of the surface of the first positive electrode material and forms a stabilizing dispersant film on the surface of the first positive electrode material, preventing agglomeration between first positive electrode material particles, thereby further enhancing the dispersibility of the first positive electrode material. By performing the step of preparing the first positive electrode material pre-dispersion (P220), the binder contacts the first positive electrode material before contacting the second positive electrode material, enabling the binder to be preferentially coated on the first positive electrode material.

The step of preparing the positive electrode slurry (P230) may be a step of adding the second positive electrode material represented by Chemical Formula 2 and a solvent to the first positive electrode material pre-dispersion and mixing to prepare a positive electrode slurry. Since the second positive electrode material is added while the binder solution is stably coated on the surface of the first positive electrode material through the step of preparing the first positive electrode material pre-dispersion (P220), the phenomenon of the first positive electrode material adhering to or agglomerating with the second positive electrode material can be greatly reduced.

According to the present disclosure, a primary mixing/stirring is performed in the step of preparing the first positive electrode material mixture (P210), a secondary mixing/stirring is performed in the step of preparing the first positive electrode material pre-dispersion (P220), and a tertiary mixing/stirring is performed in the step of preparing the positive electrode slurry (P230), so that the positive electrode slurry is prepared through multiple mixing/stirring operations. As a result, the first positive electrode material is uniformly dispersed in the positive electrode slurry. The method according to the present disclosure provides superior dispersibility of the first positive electrode material compared to the conventional method in which the first and second positive electrode material powders are mixed together first, and then a binder dispersion solution is added and mixed. When the first and second positive electrode materials are mixed in powder form, the two types of particles can mechanically agglomerate, and when the solvent is subsequently added, the large lumps may become wetted and form gel lumps. Since the second positive electrode material tends to adsorb the binder and solvent faster than the first positive electrode material due to its surface energy characteristics, according to the conventional method, the surface of the first positive electrode material remains unprotected by the binder, maintaining an agglomerated state and potentially causing gelation of the first positive electrode material.

The step of applying the positive electrode slurry (P240) may be a step of applying the positive electrode slurry onto the positive electrode current collector. Since the step of applying the positive electrode slurry (P240) is the same as the step of applying the positive electrode slurry (P130) described above, a duplicate description thereof will be omitted.

### Positive electrode

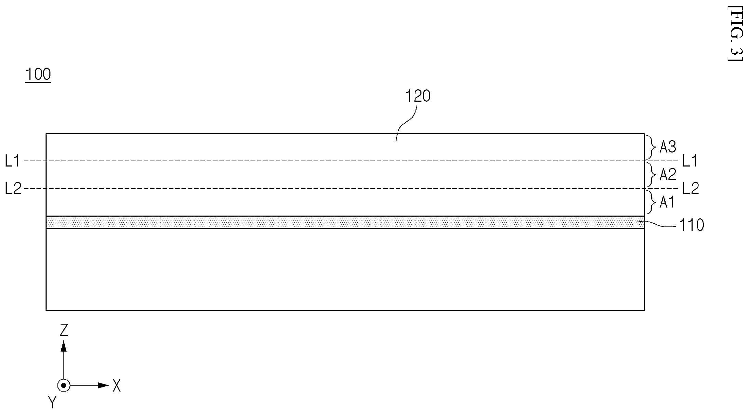

FIG. 3 is a cross-sectional view of a positive electrode according to exemplary embodiments of the present disclosure.

Referring to FIG. 3, a positive electrode 100 according to exemplary embodiments includes a positive electrode current collector 110 and a positive electrode active material layer 120 disposed on the positive electrode current collector 110. FIG. 3 shows a double-sided positive electrode in which the positive electrode active material layer 120 is disposed on both sides of the positive electrode current collector 110, but the positive electrode active material layer 120 may be disposed on only one side of the positive electrode current collector 110.

The positive electrode active material layer 120 may include the first positive electrode material represented by Chemical Formula 1 and the second positive electrode material represented by Chemical Formula 2 as described below.

[Chemical Formula 1] Li_{5+c}FeO_{4-d}A_{d}

In Chemical Formula 1, 0≤c≤0.2, 0≤d≤0.5, and A comprises one or two or more elements selected from the group consisting of F, Cl, Br, I, At, and S.

[Chemical Formula 2] Li₁₊ₐFe₁₋ₓMₓ(PO_{4-b})X_{b}

In Chemical Formula 2, M comprises any one or two or more elements selected from the group consisting of Al, Mg, Ni, Co, Mn, Ti, Ga, Cu, V, Nb, Zr, Ce, In, Zn, and Y,
X comprises any one or two or more elements selected from the group consisting of F, S, and N, and
a, b, and x satisfy -0.5≤a≤0.5, 0≤b≤0.1, and 0≤x≤0.8, respectively.

The positive electrode according to the present disclosure can be manufactured according to the method described above. The method for manufacturing a positive electrode according to exemplary embodiments of the present disclosure includes a step of preparing a first positive electrode material pre-dispersion in the preparation of the positive electrode slurry. The method for manufacturing a positive electrode according to exemplary embodiments of the present disclosure includes two or three rounds of mixing/stirring in the preparation of the positive electrode slurry. As a result, the first positive electrode material exists in a well-dispersed state in the positive electrode slurry, and consequently is uniformly distributed throughout the positive electrode active material layer 120, maximizing the capacity utilization of the first positive electrode material.

In exemplary embodiments, when the positive electrode is cut along the thickness direction (Z direction) so that the length in the X direction is 200 µm and the length in the Y direction is 200 µm, the first positive electrode material is present in an SEM image of the cross-section. The presence of the first positive electrode material can be confirmed by the following method. First, five sample positive electrodes are prepared by cutting the positive electrode along the thickness direction (Z direction) to achieve an X-direction length of 200 µm and a Y-direction length of 200 µm. Then, SEM images of the cross-sections of the five sample positive electrodes are obtained, and the presence of the first positive electrode material can be determined. Since the main component of the positive electrode active material layer 120 is the second positive electrode material, and the D₅₀ of the first positive electrode material is much larger than the D₅₀ of the second positive electrode material, the first positive electrode material can be easily distinguished from the second positive electrode material by SEM in the positive electrode cross-section. In positive electrodes manufactured according to conventional methods, the distribution of the first positive electrode material is non-uniform, and when five sample positive electrodes are obtained and their cross-sectional SEM images are observed in the same manner, the first positive electrode material cannot be observed in the cross-sectional images of some sample positive electrodes. In contrast, in positive electrodes according to the present disclosure, the first positive electrode material is observed in all five sample positive electrodes.

In exemplary embodiments, the positive electrode may satisfy Condition 1 below.

### [Condition 1]

When the cross-section of the positive electrode active material layer is equally divided into three regions along the thickness direction, the ratio of the area of the first positive electrode material in each region to the total area of the first positive electrode material in the cross-section falls within the range of 0.2 to 0.45.

Referring to FIG. 3, the cross-section of the positive electrode 100 can be divided into three regions (A1, A2, A3) by imaginary equal-division lines (L1-L1, L2-L2) parallel to the plane of the current collector (combination of X and Y directions). For convenience of description, the region closest to the current collector is called the first region (A1), the region closest to the surface of the positive electrode is called the third region (A3), and the region disposed between the first region (A1) and the third region (A3) is called the second region (A2). If the SEM image of the positive electrode cross-section is digitized, the area value of the first positive electrode material can be calculated from pixel values of the first positive electrode material. That is, a total area value of the first positive electrode material in the positive electrode cross-section (VTA) can be calculated, and an area value of a first positive electrode material present in the first region A1 (VA1), a area value of the first positive electrode material present in the second region A2 (VA2), and a area value of the first positive electrode material present in the third region A3 (VA3) can each be calculated.

Since the positive electrode manufactured according to the present disclosure is produced by applying a positive electrode slurry in which the first positive electrode material is well-dispersed, the first positive electrode material is uniformly distributed within the positive electrode. As a result of the uniform distribution of the first positive electrode material within the positive electrode, the deviations among a first ratio value (RA1 = VA1/VTA) (ratio of the area of the first positive electrode material in the first region to the total area value VTA of the first positive electrode material visible in the cross-section of the positive electrode 100), a second ratio value (RA2 = VA2/VTA) (ratio of the area of the first positive electrode material in the second region to the total area value VTA), and a third ratio value (RA3 = VA3/VTA) (ratio of the area of the first positive electrode material in the third region to the total area value VTA) are small. If the first positive electrode material is ideally uniformly distributed, the first ratio value (RA1), the second ratio value (RA2), and the third ratio value (RA3) would each have a value of 1/3. However, in practice, it is difficult for the first through third ratio values to satisfy such a value range precisely.

In the positive electrode according to the present disclosure, each of the first ratio value (RA1) through the third ratio value (RA3) may be 0.2 to 0.45, preferably 0.25 to 0.4, and more preferably 0.28 to 0.37. The closer each of the first through third ratio values is to 1/3, the more uniformly the first positive electrode material is distributed.

The sum of the first ratio value RA1, the second ratio value RA2, and the third ratio value RA3 may be in the range of 0.95 to 1.05, preferably 0.97 to 1.03. Ideally, the sum of the first ratio value RA1, the second ratio value RA2, and the third ratio value RA3 should be 1; however, the above range reflects errors in identifying the first positive electrode material region or in calculating the cross-sectional area of the identified first positive electrode material.

According to an exemplary embodiment, at the time of initial charging, a capacity value delivered by the first positive electrode material calculated according to Equation 1 below may be 700 mAh/g or more, specifically 750 to 1,100 mAh/g, and more specifically 800 to 1,000 mAh/g. In Equation 1, a capacity delivered by the second positive electrode material can be calculated according to Equation 3. In Equations 1 and 3, a content of the first positive electrode material refers to the ratio of the weight of the first positive electrode material to the total weight of the first and second positive electrode materials {= weight of first positive electrode material / (weight of first positive electrode material + weight of second positive electrode material)}, and a content of the second positive electrode material refers to the ratio of the weight of the second positive electrode material to the total weight of the first and second positive electrode materials {= weight of second positive electrode material / (weight of first positive electrode material + weight of second positive electrode material)}. [Equation 1] 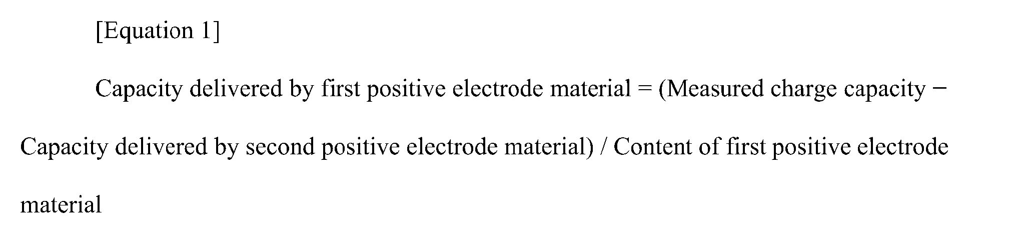 Capacity delivered by first positive electrode material = (Measured charge capacity - Capacity delivered by second positive electrode material) / Content of first positive electrode material [Equation 3] 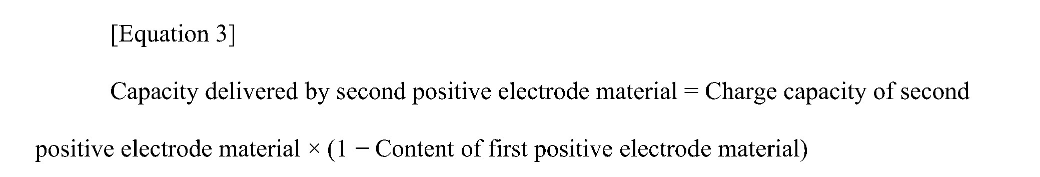 Capacity delivered by second positive electrode material = Charge capacity of second positive electrode material × (1 - Content of first positive electrode material)

In a positive electrode where the first and second positive electrode materials are mixed as positive electrode active materials, the delivered capacity value is reduced compared to a positive electrode where only the first positive electrode material is used as the positive electrode active material. Although the first positive electrode material has a charge capacity of 700 mAh/g or more, in a positive electrode where the first and second positive electrode materials are mixed, the capacity delivered by the first positive electrode material is less than this value. The positive electrode according to the present disclosure has the characteristic that the first positive electrode material is uniformly distributed within the positive electrode active material layer, resulting in an improved capacity utilization rate of the first positive electrode material compared to positive electrodes manufactured according to conventional methods, even when the first positive electrode material is included in the same amount. Therefore, a lithium secondary battery with high energy density can be instantiated.

According to exemplary embodiments of the present disclosure, the positive electrode active material layer may have a Quantified Binder Ratio (QBR) of 1.3 or less. Here, the QBR is defined by Equation 2 below. The QBR value of the positive electrode active material layer may be specifically in the range of 1.2 to 1.29, more specifically 1.22 to 1.28, and even more specifically 1.23 to 1.27. [Equation 2] $QBR = Bs / Bf$

In Equation 2, Bs represents an average fluorine content in the positive electrode active material layer surface region extending from the outermost surface of the positive electrode active material layer to within 15% of the total thickness of the positive electrode active material layer; and Bf represents an average fluorine content in the positive electrode active material layer bottom region extending from the interface of the positive electrode active material layer facing the current collector to within 15% of the total thickness of the positive electrode active material layer.

The closer the QBR value is to 1, the more similar the amounts of binder distributed near the current collector and near the electrode surface are, indicating excellent adhesion between the current collector and the positive electrode active material layer. According to embodiments of the present disclosure, not only the dispersibility of the first positive electrode material but also the dispersibility of the conductive material and binder are improved, resulting in excellent positive electrode adhesion, which is advantageous for instantiating high energy density batteries and long-cycle-life batteries.

According to the present disclosure, the capacity utilization of the first positive electrode material is maximized, resulting in excellent initial efficiency of the battery, and since the first positive electrode material continuously supplies lithium ions as the battery undergoes repeated charge/discharge cycling, a long-life secondary battery can be instantiated.

Since the first positive electrode material and the second positive electrode material have been described in detail above, a repeated explanation will be omitted. Similarly, since the binders and conductive materials included in the positive electrode active material layer have also been described in detail above, a repeated explanation will be omitted.

### Lithium Secondary Battery

A lithium secondary battery according to exemplary embodiments of the present disclosure includes a positive electrode, a negative electrode, a separator, and an electrolyte, wherein the positive electrode may be the positive electrode described above. For example, the positive electrode includes a positive electrode current collector and a positive electrode active material layer disposed on the positive electrode current collector. The positive electrode active material layer includes the first positive electrode material represented by Chemical Formula 1 and the second positive electrode material represented by Chemical Formula 2.

[Chemical Formula 1] Li_{5+c}FeO_{4-d}A_{d}

In Chemical Formula 1, 0≤c≤0.2, 0≤d≤0.5, and A comprises one or two or more elements selected from the group consisting of F, Cl, Br, I, At, and S.

[Chemical Formula 2] Li₁₊ₐFe₁₋ₓMₓ(PO_{4-b})X_{b}

In Chemical Formula 2, M comprises any one or two or more elements selected from the group consisting of Al, Mg, Ni, Co, Mn, Ti, Ga, Cu, V, Nb, Zr, Ce, In, Zn, and Y,
X comprises any one or two or more elements selected from the group consisting of F, S, and N, and
a, b, and x satisfy -0.5≤a≤0.5, 0≤b≤0.1, and 0≤x≤0.8, respectively.

Since the positive electrode has been described in detail above, a duplicate description thereof will be omitted.

The negative electrode can be manufactured, for example, by preparing a negative electrode slurry including a negative electrode active material, a negative electrode binder, and a negative electrode conductive material, applying the slurry onto a negative electrode current collector, and drying and rolling.

The negative electrode active material is not particularly limited, and compounds capable of reversible intercalation and deintercalation of lithium can generally be used. Specific examples include carbonaceous materials such as artificial graphite, natural graphite, graphitized carbon fiber, amorphous carbon, and highly crystalline carbon; metallic compounds capable of alloying with lithium such as Si, Al, Sn, Pb, Zn, Bi, In, Mg, Ga, Cd, Si alloys, Sn alloys, and Al alloys; and composites including metallic compounds and carbonaceous materials. Low-crystallinity carbons include soft carbon and hard carbon; high-crystallinity carbons include high-temperature fired carbons such as natural graphite, kish graphite, pyrolytic carbon, mesophase pitch-based carbon fiber, meso-carbon microbeads (MCMB), mesophase pitches, and petroleum or coal tar pitch-derived cokes. One type or a mixture of two or more types of these may be used, and a metallic lithium thin film may also be used as the negative electrode active material. Among these, natural graphite and artificial graphite have excellent density and electrical conductivity, high capacity, and high energy density; therefore, when the negative electrode includes natural graphite and/or artificial graphite as the negative electrode active material, a battery with excellent rate capability can be instantiated.

The negative electrode conductive material is used to impart electrical conductivity to the electrode and may be used without particular limitation as long as it has electronic conductivity without causing chemical changes in the battery. Specific examples include: graphites such as natural graphite and artificial graphite; carbon blacks such as acetylene black, Ketjen black, channel black, furnace black, lamp black, and thermal black; conductive fibers such as carbon fiber and metal fiber; conductive tubes such as carbon nanotubes; fluorocarbon; metal powders such as aluminum, and nickel powder; conductive whiskers such as zinc oxide and potassium titanate; conductive metal oxides such as titanium oxide; and conductive materials such as polyphenylene derivatives. The negative electrode conductive material may be included in an amount of typically 1 to 30 wt%, specifically 0.1 to 10 wt%, and more specifically 0.5 to 5 wt%, relative to the total weight of the negative electrode active material layer.

The negative electrode binder serves to improve adhesion between negative electrode active material particles and between the negative electrode active material and the negative electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluorine rubber, and various copolymers thereof. One type or a mixture of two or more types of these may be used. The negative electrode binder may be included in the negative electrode active material layer in an amount of 0.1 to 30 wt%, specifically 0.1 to 10 wt%, and more specifically 0.5 to 5 wt%.

Meanwhile, the negative electrode current collector is not particularly limited as long as it has high electrical conductivity without causing chemical changes in the battery. For example, copper, stainless steel, aluminum, nickel, titanium, sintered carbon, copper or stainless steel surface-treated with carbon, nickel, titanium, silver, or the like, and aluminum-cadmium alloys may be used.

The negative electrode current collector typically has a thickness of 3 to 500 µm. As with the positive electrode current collector, fine irregularities may be formed on the surface of the negative electrode current collector to enhance the coupling strength of the negative electrode active material. It may be used in various forms such as film, sheet, foil, net, porous body, foam, and nonwoven fabric.

The separator may be any porous substrate commonly used as a separator in lithium secondary batteries, and for example, polyolefin-based porous membranes or nonwoven fabrics may be used, but the separator is not particularly limited thereto. In particular, it is preferable to have low resistance to ion movement in the electrolyte and excellent electrolyte-wetting capability.

Examples of the polyolefin-based porous membrane include membranes formed from polyolefin-based polymers such as polyethylene including high-density polyethylene, linear low-density polyethylene, low-density polyethylene, and ultra-high molecular weight polyethylene, polypropylene, polybutylene, and polypentene, used alone or as a blend.

Examples of the nonwoven fabric include, in addition to polyolefin-based nonwoven fabrics, nonwoven fabrics formed from polymers such as polyethylene terephthalate (PET), polybutylene terephthalate (PBT), polyester, polyacetal, polyamide, polycarbonate, polyimide, polyether ether ketone (PEEK), polyether sulfone (PES), polyphenylene oxide (PPO), polyphenylene sulfide (PPS), and polyethylene naphthalate (PEN), used alone or as a blend. The structure of the nonwoven fabric may be a spunbond or meltblown nonwoven fabric composed of long fibers.

The thickness of the porous substrate is not particularly limited but may be 5 to 50 µm. The pore size and porosity of the porous substrate are also not particularly limited but may be 0.01 to 50 µm and 10 to 95%, respectively.

Meanwhile, to improve the mechanical strength of the separator formed from the porous substrate and suppress short circuits between the positive electrode and negative electrode, the separator may further include a porous coating layer containing inorganic particles and a binder polymer on at least one surface of the porous substrate.

Meanwhile, the electrolyte in the lithium secondary battery may include an organic solvent and a lithium salt commonly used in electrolytes, and is not particularly limited.

The organic solvent may be used without particular limitation as long as it can serve as a medium for the movement of ions involved in the electrochemical reactions of the battery. Specific examples of the organic solvent include ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; and carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC).

Among these, carbonate-based solvents are preferred, and a mixture of cyclic carbonates with high ion conductivity and high dielectric constant (e.g., ethylene carbonate or propylene carbonate) and low-viscosity linear carbonate compounds (e.g., ethyl methyl carbonate, dimethyl carbonate, or diethyl carbonate) that can improve the charge/discharge performance of the battery is more preferred.

The lithium salt may be used without particular limitation as long as it is a compound capable of providing lithium ions for use in the lithium secondary battery. Specific examples of the lithium salt include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂. The lithium salt is preferably included in the electrolyte at a concentration of approximately 0.6 mol% to 2 mol%.

In addition to the components described above, the electrolyte may further include one or more additives for the purpose of improving battery cycle life, suppressing battery capacity reduction, and enhancing battery discharge capacity, such as pyridine, triethyl phosphite, triethanolamine, cyclic ether, ethylenediamine, n-glyme, hexamethyl phosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, and aluminum trichloride. In this case, the additive may be included at 0.1 to 5 wt% relative to the total weight of the electrolyte.

The lithium secondary battery of the present disclosure can be manufactured by disposing a separator between the positive electrode and the negative electrode to form an electrode assembly, placing the electrode assembly in a cylindrical battery case, prismatic battery case, or pouch-type battery case, and then injecting an electrolyte. Alternatively, the electrode assembly may be laminated and then impregnated in an electrolyte, and the resulting product may be placed in a battery case and sealed.

Unlike the lithium secondary battery described above, a lithium secondary battery according to another embodiment of the present disclosure may be an all-solid-state battery. The battery case may be any type commonly used in the art, and the external form of the case is not limited, and may be, for example, cylindrical using a can, prismatic, pouch-type, or coin-type.

Since the lithium secondary battery according to the present disclosure stably exhibits excellent discharge capacity, rate capability, and capacity retention rate, it is useful in the field of portable devices such as mobile phones, laptops, and digital cameras, energy storage systems (ESS), and electric vehicles such as hybrid electric vehicles (HEVs).

Hereinafter, the present disclosure will be described in more detail by way of Examples. However, the following Examples are provided for illustrative purposes only and are not intended to limit the scope of the present disclosure.

### Example

NMP (N-methyl-2-pyrrolidone) was introduced as a solvent into a homomixer, and Li₅FeO₄ with a D₅₀ of 7 µm was added as the first positive electrode material. The mixture was stirred at 1,500 rpm/min for 30 minutes to prepare a first positive electrode material pre-dispersion. LiMn_{0.6}Fe_{0.4}PO₄ with a D₅₀ of 1.0 µm was weighed and added as the second positive electrode material to the homomixer, and the mixture was stirred at 1,500 rpm/min for 30 minutes. Subsequently, carbon black as a conductive material, polyvinylidene fluoride (PVdF) as a binder, LiMn_{0.6}Fe_{0.4}PO₄ with a D₅₀ of 1.0 µm as additional second positive electrode material, and additional NMP solvent were added, and the mixture was stirred at 1,500 rpm/min for 60 minutes to prepare the positive electrode slurry.

The positive electrode slurry was applied onto an aluminum foil of approximately 14 to 15 µm thickness, dried, and rolled to complete the fabrication of the positive electrode.

### Comparative Example

Li₅FeO₄ in powder form with a D₅₀ of 7 µm as the first positive electrode material and LiMn_{0.6}Fe_{0.4}PO₄ in powder form with a D₅₀ of 1.0 µm as the second positive electrode material were mixed and stirred using a bead mill. NMP (N-methyl-2-pyrrolidone) was introduced as a solvent into a homomixer, and the mixture of first and second positive electrode materials, carbon black as a conductive material, and polyvinylidene fluoride (PVdF) as a binder were added, and the mixture was stirred at 1,500 rpm/min for 60 minutes to prepare the positive electrode slurry.

The positive electrode slurry was applied onto an aluminum foil of approximately 14 to 15 µm thickness, dried, and rolled to complete the fabrication of the positive electrode.

### Experimental Example 1: SEM Observation of Positive Electrode Cross-Sections

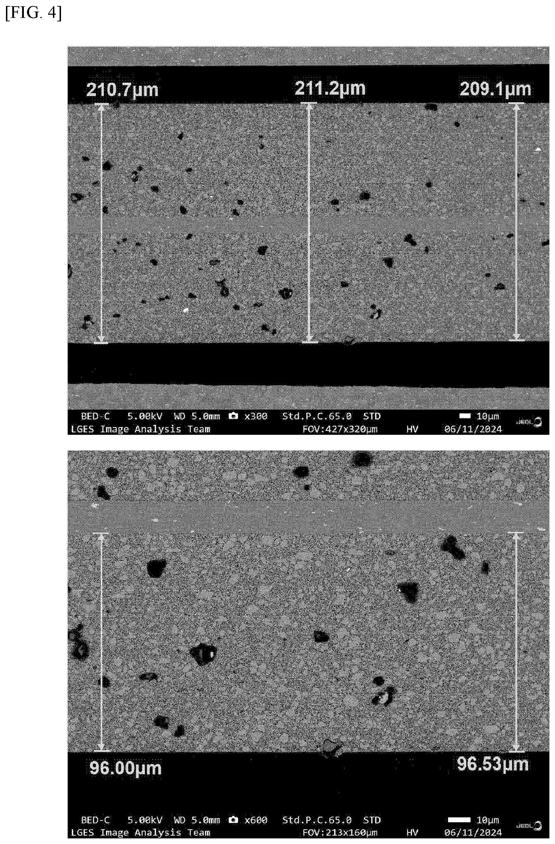

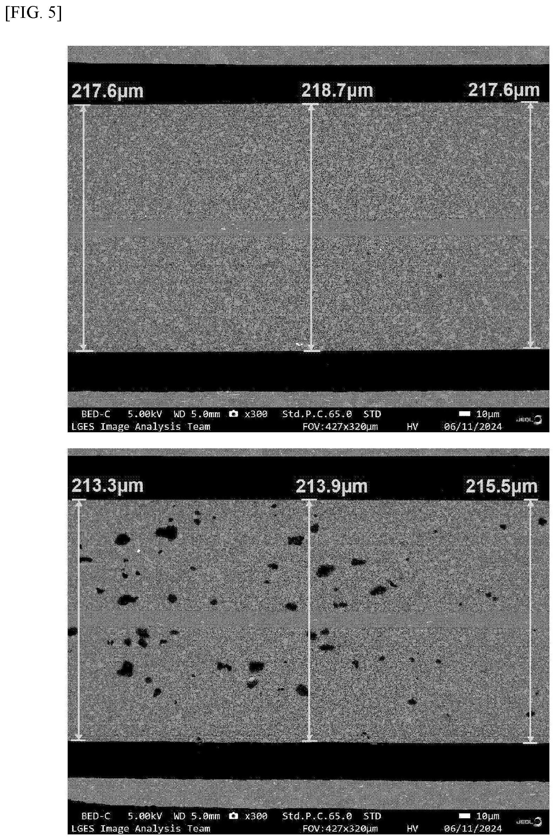

The cross-sections of the positive electrodes of the Example and Comparative Example, cut along the thickness direction perpendicular to the plane of the current collector, were observed using SEM, and the images are shown in FIG. 4 (Example) and FIG. 5 (Comparative Example).

In FIGS. 4 and 5, regions displayed in black represent the first positive electrode material, and regions displayed in gray represent the second positive electrode material.

Referring to FIG. 4, the first positive electrode material is observed in the SEM image of the positive electrode cross-section according to the Example. It can also be confirmed in FIG. 4 that the first positive electrode material is uniformly distributed in the region near the current collector and in the central region in the thickness direction. Referring to FIG. 5, while the first positive electrode material is observed in some of the sample positive electrodes according to the Comparative Example, it is not observed in other sample positive electrodes.

### Experimental Example 2: Measurement of Charge Capacity/Discharge Capacity

### (Fabrication of Test Lithium Secondary Batteries)

Artificial graphite as the negative electrode active material, styrene-butadiene rubber (SBR) as the binder, carboxymethyl cellulose (CMC) as the thickener, and carbon black as the conductive material were added to water, mixed, and stirred to prepare a negative electrode slurry. A weight ratio of the negative electrode active material, binder, thickener, and conductive material was set to 93:2.5:1.5:3. A negative electrode slurry was applied onto a copper foil, dried, and rolled to fabricate the negative electrode.

An electrode assembly was fabricated by interposing a polyethylene porous membrane between each of the positive electrodes of the Example and the Comparative Example and the respective negative electrodes. The assembly was placed in a battery case, and an electrolyte was injected. The electrolyte used was one prepared by dissolving 1M LiPF₆ in an organic solvent comprising a mixture of ethylene carbonate (EC) and ethyl methyl carbonate (EMC) at a volumetric ratio of 30:70.

The prepared pre-lithium secondary batteries were pre-aged at room temperature (22±2°C) for 2 days, then charged at 0.1C until reaching a state of charge (SOC) of 30% for activation. The activated lithium secondary batteries were then aged at room temperature (22±2°C) and 60°C for 1 day each, and the gas formed inside the battery case was vented to prepare the test lithium secondary batteries.

### (Measurement of Charge Capacity/Discharge Capacity)

The coin cells prepared as described above were charged and discharged for the first time, and the charge capacity and discharge capacity were measured. The results are shown in Table 1.

Additionally, the capacity delivered by the first positive electrode material was calculated according to Equation 1 below, and the results are shown in Table 1. [Equation 1] 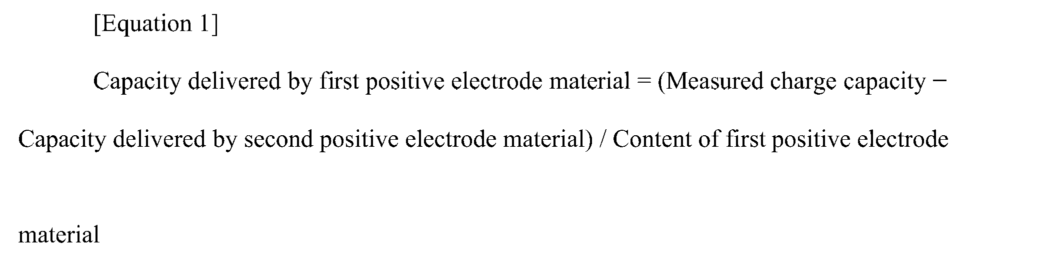 Capacity delivered by first positive electrode material = (Measured charge capacity - Capacity delivered by second positive electrode material) / Content of first positive electrode material

### Experimental Example 3: Calculation of QBR

Ion milling was performed on the cross-sections of the positive electrodes of the Example and Comparative Example. The compositional components in the positive electrode active material layer of the fabricated electrode cross-sections were EDS-mapped (Energy Dispersive X-ray Spectroscopy mapping) using the EDS detector of the SEM instrument. Line profiles were extracted along the thickness direction of the positive electrode active material layer from the EDS mapping results. From the extracted line profile results, the average fluorine content (Bs) in the fluorine-containing binder in the positive electrode active material layer surface region and the average fluorine content (Bf) in the fluorine-containing binder in the positive electrode active material layer bottom region were extracted. The QBR values were calculated using Equation 2 below. [Equation 2] $QBR = Bs / Bf$

Here, the positive electrode active material layer surface region is the region from the outermost surface in the thickness direction of the positive electrode active material layer to within 15% of the total thickness of the positive electrode active material layer, and the positive electrode active material layer bottom region is the region from the interface of the positive electrode active material layer facing the current collector to within 15% of the total thickness of the positive electrode active material layer.

**[Table 1]**

| | Charge capacity@0.1C (mAh/g) | Discharge capacity@0.1C (mAh/g) | Delivered capacity of first positive electrode material | QBR |
|---|---|---|---|---|
| Example | 179.2 | 153.9 | 929.8 | 1.25 |
| Comparative Example | 172.9 | 150.0 | 669.2 | 1.31 |

Referring to Table 1, the lithium secondary battery manufactured using the positive electrode of the Example exhibited higher initial charge capacity and higher capacity delivered by the first positive electrode material compared to the lithium secondary battery manufactured using the positive electrode of the Comparative Example. Furthermore, the QBR value of the positive electrode according to the Example is closer to 1 than the QBR value of the positive electrode according to the Comparative Example, indicating that the positive electrode of the Example is expected to have greater adhesion strength than the positive electrode of the Comparative Example.

As described above, the positive electrode according to the embodiment of the present disclosure is expected to be capable of realizing a high energy density battery with excellent initial capacity and adhesion strength, and maximized capacity utilization rate of the first positive electrode material.

While the present disclosure has been described in more detail through drawings and examples, it should be understood that the configurations described in the drawings or examples herein are only one embodiment of the present disclosure and do not represent the entirety of the technical spirit of the present disclosure. Therefore, it should be understood that various equivalents and modifications may be substituted for these at the time of filing this application.

## Claims

1. A method for manufacturing a positive electrode comprising:
adding a first positive electrode material represented by Chemical Formula 1 below to a solvent and mixing to prepare a first positive electrode material pre-dispersion;
adding a second positive electrode material represented by Chemical Formula 2 below, a conductive material, a binder, and a solvent to the first positive electrode material pre-dispersion and mixing to prepare a positive electrode slurry; and
applying the positive electrode slurry onto a positive electrode current collector:
[Chemical Formula 1] Li_{5+c}FeO_{4-d}A_{d}
In Chemical Formula 1, 0≤c≤0.2, 0≤d≤0.5, and A comprises one or two or more elements selected from the group consisting of F, Cl, Br, I, At, and S.
[Chemical Formula 2] Li₁₊ₐFe₁₋ₓMₓ(PO_{4-b})X_{b}
In Chemical Formula 2, M comprises any one or two or more elements selected from the group consisting of Al, Mg, Ni, Co, Mn, Ti, Ga, Cu, V, Nb, Zr, Ce, In, Zn, and Y,
X comprises any one or two or more elements selected from the group consisting of F, S, and N, and
a, b, and x satisfy -0.5≤a≤0.5, 0≤b≤0.1, and 0≤x≤0.8, respectively.

2. A method for manufacturing a positive electrode comprising:
mixing a conductive material and a first positive electrode material represented by Chemical Formula 1 below to prepare a first positive electrode material mixture;
adding the first positive electrode material mixture and a binder solution, in which a binder is dispersed, to a solvent and mixing to prepare a first positive electrode material pre-dispersion;
adding a second positive electrode material represented by Chemical Formula 2 below and a solvent to the first positive electrode material pre-dispersion and mixing to prepare a positive electrode slurry; and
applying the positive electrode slurry onto a positive electrode current collector:
[Chemical Formula 1] Li_{5+c}FeO_{4-d}A_{d}
In Chemical Formula 1, 0≤c≤0.2, 0≤d≤0.5, and A comprises one or two or more elements selected from the group consisting of F, Cl, Br, I, At, and S.
[Chemical Formula 2] Li₁₊ₐFe₁₋ₓMₓ(PO_{4-b})X_{b}
In Chemical Formula 2, M comprises any one or two or more elements selected from the group consisting of Al, Mg, Ni, Co, Mn, Ti, Ga, Cu, V, Nb, Zr, Ce, In, Zn, and Y,
X comprises any one or two or more elements selected from the group consisting of F, S, and N, and
a, b, and x satisfy -0.5≤a≤0.5, 0≤b≤0.1, and 0≤x≤0.8, respectively.

3. The method for manufacturing a positive electrode of claim 1 or claim 2, wherein
in the positive electrode slurry, the first positive electrode material is included in an amount ranging from 0.5 to 5 wt% relative to a total weight of the first and second positive electrode materials.

4. The method for manufacturing a positive electrode of claim 1 or claim 2, wherein
the first positive electrode material comprises Li₅FeO₄.

5. The method for manufacturing a positive electrode of claim 1 or claim 2, wherein
the conductive material comprises carbon black.

6. The method for manufacturing a positive electrode of claim 1 or claim 2, wherein
the first positive electrode material has an average particle diameter (D₅₀) in a range of 1 to 20 µm.

7. The method for manufacturing a positive electrode of claim 1 or claim 2, wherein
the second positive electrode material has an average particle diameter (D₅₀) in a range of 0.2 to 3.0 µm.

8. A positive electrode comprising:
a positive electrode current collector; and a positive electrode active material layer disposed on the positive electrode current collector, wherein
the positive electrode active material layer comprises a first positive electrode material represented by Chemical Formula 1 below and a second positive electrode material represented by Chemical Formula 2 below, and
when the positive electrode is cut along the thickness direction (Z direction) so that the length in the X direction is 200 µm and the length in the Y direction is 200 µm, the first positive electrode material is present in an SEM image of the cross-section:
[Chemical Formula 1] Li_{5+c}FeO_{4-d}A_{d}
In Chemical Formula 1, 0≤c≤0.2, 0≤d≤0.5, and A comprises one or two or more elements selected from the group consisting of F, Cl, Br, I, At, and S.
[Chemical Formula 2] Li₁₊ₐFe₁₋ₓMₓ(PO_{4-b})X_{b}
In Chemical Formula 2, M comprises any one or two or more elements selected from the group consisting of Al, Mg, Ni, Co, Mn, Ti, Ga, Cu, V, Nb, Zr, Ce, In, Zn, and Y,
X comprises any one or two or more elements selected from the group consisting of F, S, and N, and
a, b, and x satisfy -0.5≤a≤0.5, 0≤b≤0.1, and 0≤x≤0.8, respectively.

9. The positive electrode of claim 8, satisfying Condition 1 below:
[Condition 1]
When the cross-section of the positive electrode active material layer is equally divided into three regions along the thickness direction, a ratio of an area of the first positive electrode material in each region to a total area of the first positive electrode material in the cross-section falls within a range of 0.2 to 0.45.

10. The positive electrode of claim 8, wherein
in the positive electrode active material layer, the first positive electrode material is included in an amount ranging from 0.5 to 5 wt% relative to a total weight of the first and second positive electrode materials.

11. The positive electrode of claim 8, wherein
the first positive electrode material comprises Li₅FeO₄.

12. The positive electrode of claim 8, wherein
the positive electrode active material layer further comprises a conductive material, and
the conductive material comprises carbon black.

13. The positive electrode of claim 8, wherein
the first positive electrode material has an average particle diameter (D₅₀) in a range of 1 to 20 µm.

14. The positive electrode of claim 8, wherein
the second positive electrode material has an average particle diameter (D₅₀) in a range of 0.2 to 3.0 µm.

15. The positive electrode of claim 8, wherein
at a time of initial charging, a capacity value delivered by the first positive electrode material calculated according to Equation 1 below is 700 mAh/g or more. [Equation 1] 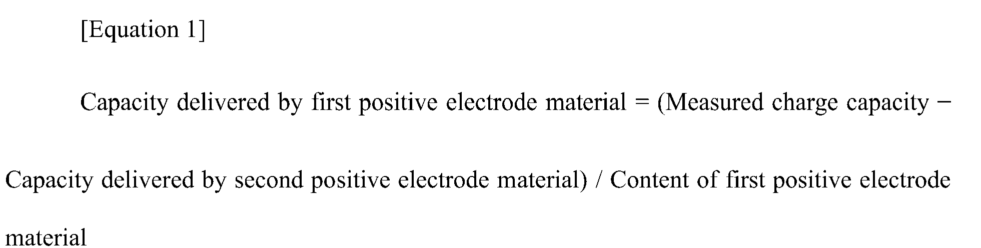 Capacity delivered by first positive electrode material = (Measured charge capacity - Capacity delivered by second positive electrode material) / Content of first positive electrode material

16. The positive electrode of claim 8, wherein
the positive electrode active material layer has a Quantified Binder Ratio (QBR) of 1.3 or less, and the QBR is defined by Equation 2 below: [Equation 2] $QBR = Bs / Bf$
In Equation 2, Bs represents an average fluorine content in a positive electrode active material layer surface region extending from an outermost surface of the positive electrode active material layer to within 15% of a total thickness of the positive electrode active material layer; and Bf represents an average fluorine content in a positive electrode active material layer bottom region extending from an interface of the positive electrode active material layer facing the current collector to within 15% of the total thickness of the positive electrode active material layer.

17. A lithium secondary battery comprising a positive electrode, a negative electrode, a separator, and an electrolyte, wherein
the positive electrode is the positive electrode according to any one of claims 8 to 16.
